# EUROPEAN PATENT SPECIFICATION

(11) **EP 0 696 534 B1**
(45) Date of publication and mention of the grant of the patent: **18.09.1996**
(21) Application number: 94111737.6
(22) Date of filing: 27.07.1994
(51) Int. Cl.: B60T 13/72

(54) **A vehicle brake system having an electronically controlled booster**
Fahrzeugbremsanlage mit elektronisch gesteuertem Kraftverstärker
Système de freinage d'un véhicule à amplificateur de force à commande électronique

(43) Date of publication of application: 14.02.1996
(73) Proprietor: LUCAS INDUSTRIES PUBLIC LIMITED COMPANY, Solihull, West Midlands B91 3TX (GB)
(72) Inventor: Dieringer, Werner, D-56179 Vallendar (DE); Kohrt, Jens-Peter, D-56075 Koblenz (DE); Mohr, Kurt, 56283 Halsenbach-Ehr (DE); Heibel, Helmut, D-56424 Moschheim (DE); Michels, Erwin, D-56829 Kail (DE); Renn, Hans-Werner, D-56626 Andernach (DE)
(74) Representative: Schmidt, Steffen J., Dipl.-Ing.

(56) References cited:
- EP-A- 0 379 329
- DE-A- 3 902 215

## Description

The invention concerns a vehicle brake system having an electronically adjustable brake booster.

The desired result of vehicle brake systems having brake boosters is to optimally perform a braking operation initiated by the driver even if the driver's behavior is not always commensurate with the respective situation involved. To this end, electromagnetically actuated control means for additional braking is provided which is activated in response to the actuation dynamics of the brake pedal (see German patent application P 42 17 409).

In the case of emergency braking, when the braking operation is enhanced by a brake booster, the boosting operation is increased to the extent as allowed by the pressure differential in the individual chambers of the brake booster. The actuation velocity of the brake pedal is used as the triggering criterion. As soon as a given threshold value of the actuation velocity is surpassed, the maximum possible amplification of the brake boosting operation is initiated. Although this operation results in a considerably shortened brake path, the driver is deprived of the control of the braking operation in that the initiated full braking proceeds entirely automatically, in other words the driver is no longer in a position to intervene in the braking operation. It is however desirable to stop full braking or emergency braking operations by an intervention on the part of the driver, for instance when the danger does not exist anymore.

EP 0 379 329 discloses a brake booster in which a switch having two touch contacts is provided in the housing of the brake booster. An actuating member axially displaced by a brake pedal includes a laterally protruding bar which is adapted to bridge the two contacts and thus close a circuit.

In order to control the process of braking initiated by the driver more thoroughly by an electronic control device (ABS), it is very advantageous to have an indication on the dynamics of the braking, i.e. with which velocity per time unit and with which force (of the time unit) the brake pedal is operated by a driver. Indications on these characteristics are very helpful to further optimise the course of a braking process, since the electronic control device can more acutely and more efficiently activate the automatic braking.

Based on the above, the problem underlying the present invention is to provide an apparatus by which a driver-initiated sudden stopping during an emergency braking operation is determined safely and free of interferences and which allows for a control of the braking process to achieve a shorter braking path.

For solving said problem, the afore named apparatus has been further developed by the features of claim 1.

Further characteristics and advantages entailed by the intention will be described in greater detail in the following description of embodiments of the invention, with reference to the enclosed drawings.

Fig. 1 shows a brake booster in a schematic sectional view.

Fig. 2 shows an embodiment of a control valve for a brake booster in a sectional view.

Fig. 3 shows a partial enlarged view of a switch means used in the embodiment of fig. 2.

Fig. 4 shows a further embodiment of a control valve for a brake booster in a sectional view.

Fig. 5 shows a partial enlarged view of a switch means used

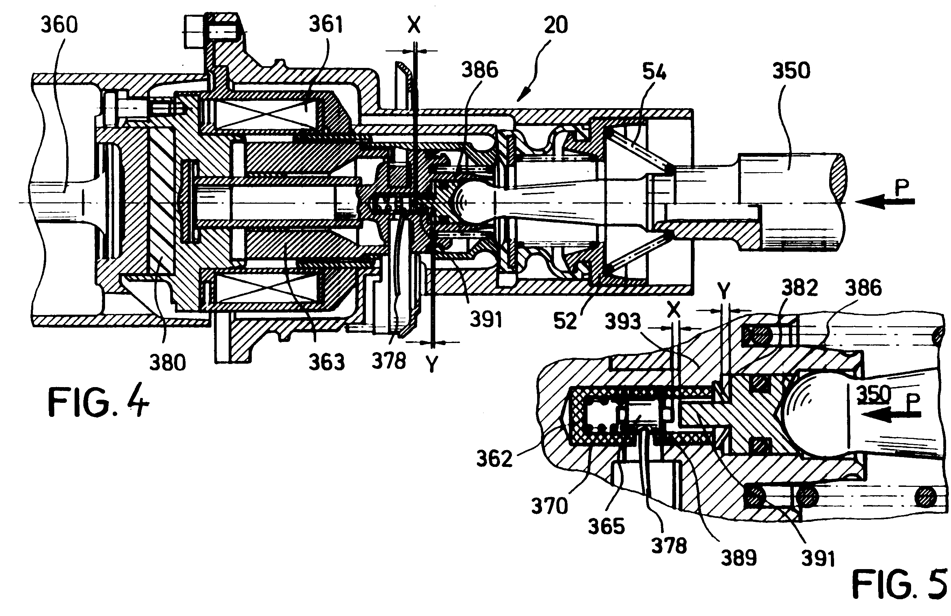

Fig. 5 shows a partial enlarged view of a switch means used in the embodiment of fig. 4.

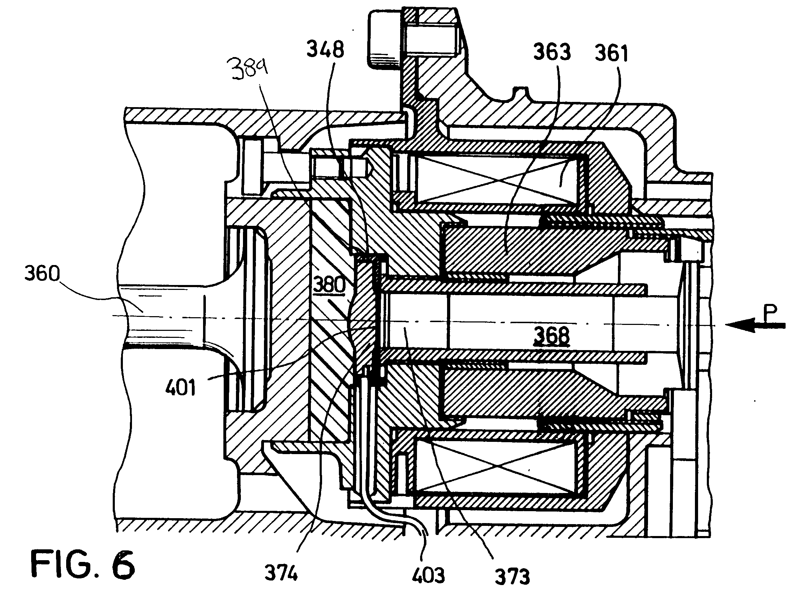

Fig. 6 shows a further embodiment of a control valve for a brake booster in an enlarged sectional view.

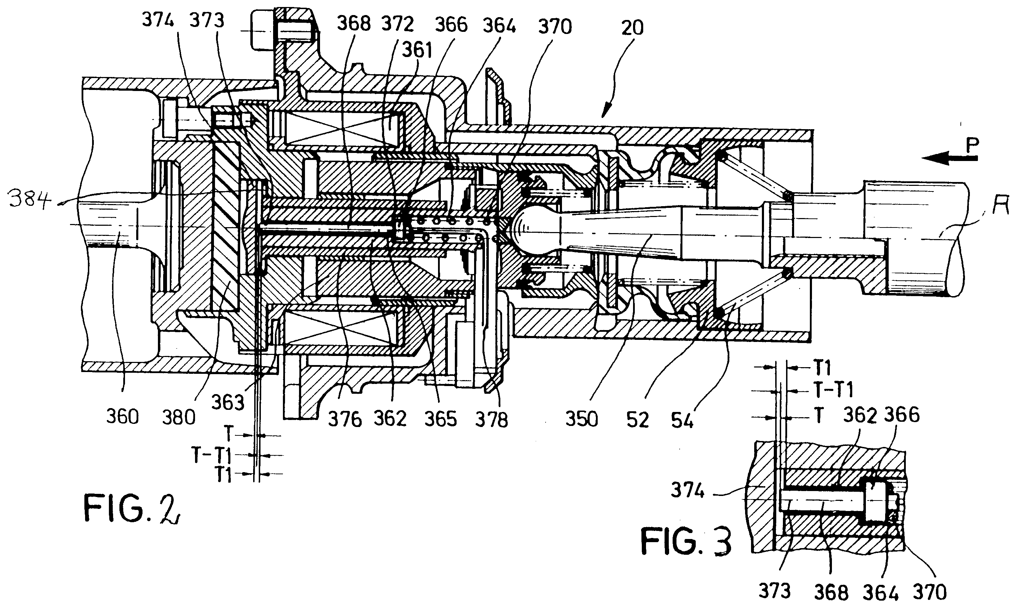

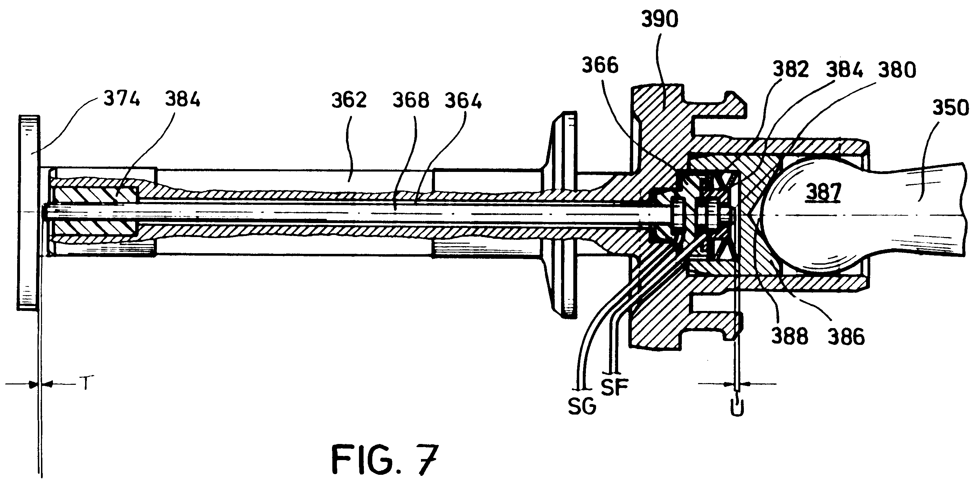

Fig. 7 shows a partial enlarged view of a switch means to be used in the embodiment of fig. 2.

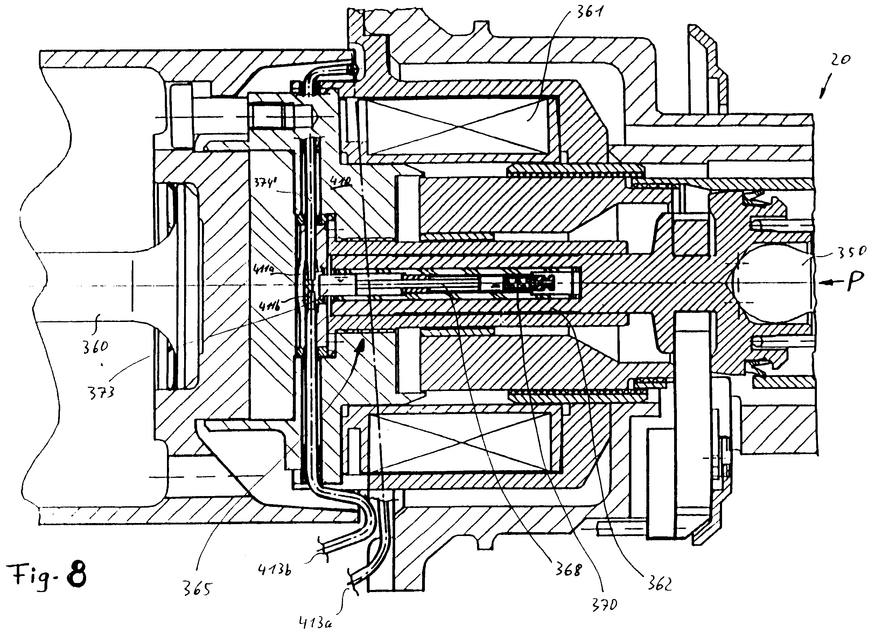

Fig. 8 shows a further embodiment of a control valve for a brake booster in an enlarged sectional view.

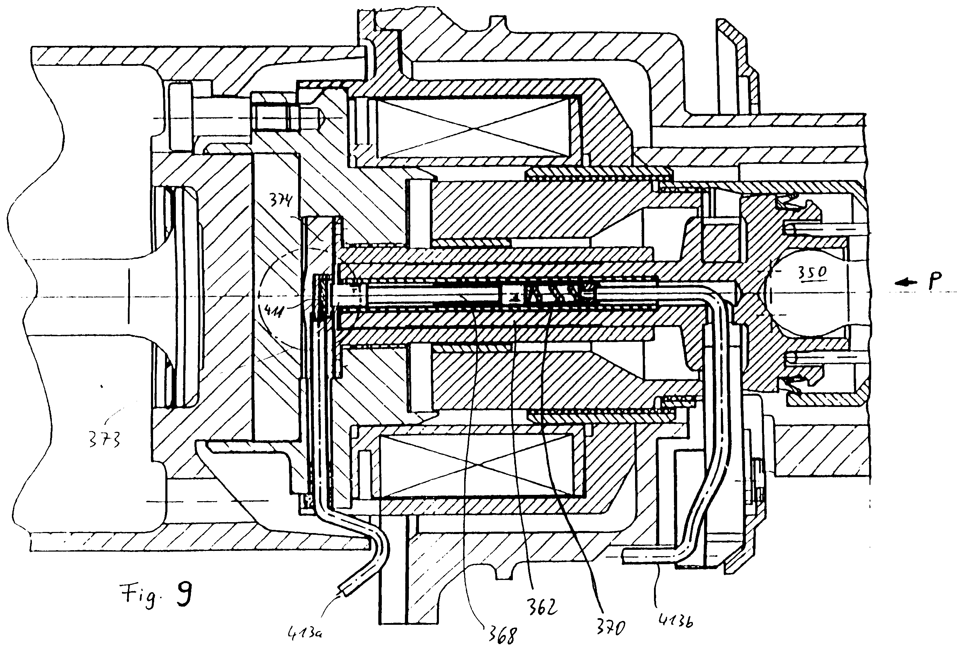

Fig. 9 shows a further embodiment of a control valve for a brake booster in an enlarged sectional view.

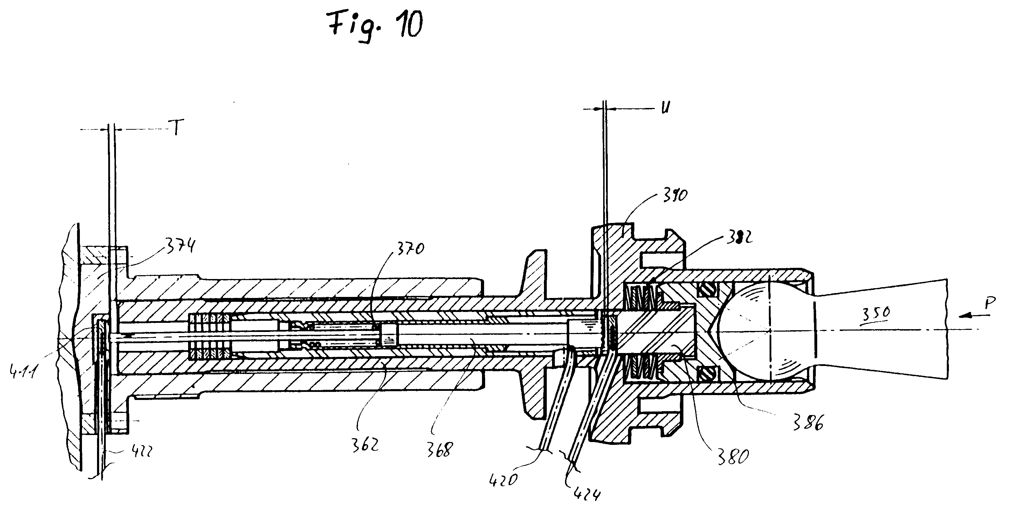

Fig. 10 shows a partial enlarged view of a further switch means to be used in the embodiment of fig. 2.

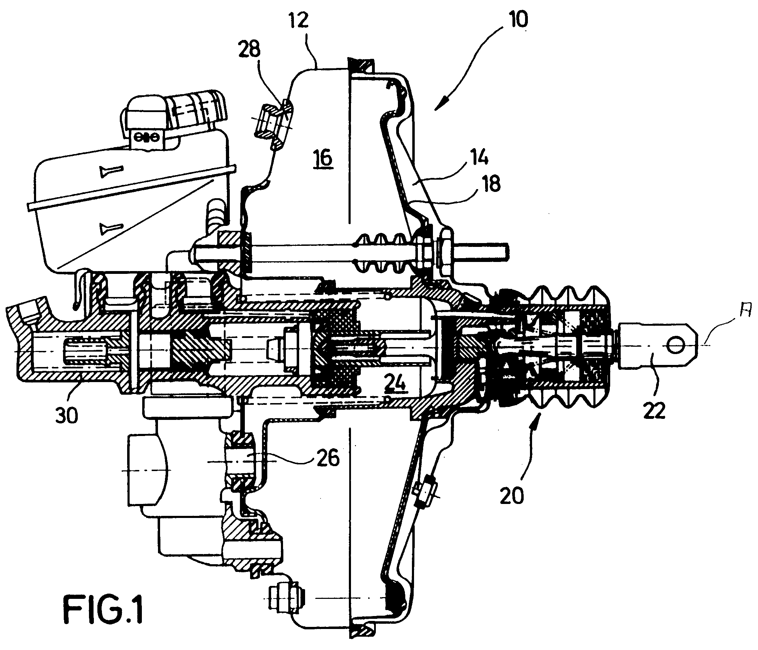

Fig. 1 is a general view of a brake booster of a vehicle brake system which is provided with a switch means according to the invention.

The illustrated brake booster 10 has a substantially rotation-symmetrical housing 12 with a rear chamber 14 and a front chamber 16 which are separated by a movable partition 18. The brake booster includes a first controllable valve 20 which is connected to moveable partition 18 for joint relative movement with respect to housing 12. The front end of a rod-shaped actuator 22 acts on valve 20, which, in the built-in or assembled condition, is connected to a brake pedal (not illustrated) of the motor vehicle.

Rear chamber 14 is connected to a defined central space 24 of the brake booster 10 by a check valve in such a way that air from said space 24 can flow into rear chamber 14, but cannot return. Central space 24 also communicates with a port 26 in housing 12 so as to admit air. Another port 28 in housing 12 connects front chamber 16 to an outside vacuum source.

A power output member 30 is provided in central space 24 of the brake booster and rests against controllable valve 20. Power output member 30 is provided to actuate a master brake cylinder (not illustrated).

In the inoperative condition illustrated, with the low-pressure or vacuum source switched off, atmospheric pressure prevails in both chambers 14 and 16. Vacuum builds up in front chamber 16 when the vacuum source is switched on, for instance, during running of the engine with whose intake pipe the vacuum port 28 communicates so that the movable partition 18 is shifted slightly forwardly, accompanied by movement of valve 20, whereby the pressure once again becomes balanced between the two chambers 14 and 16. This position of readiness makes sure that from here on the brake pressure booster can be actuated without a loss distance.

The brake booster operates in the usual manner when the brake is normally actuated by the driver and the connection between the two chambers 14 and 16 is interrupted via controllable valve 20 and ambient air flows into rear chamber 14. As a consequence, an actuating force amplified by the brake booster is available at power output member 30. This is true also in a case where vacuum continues to prevail in central space 24 as it does in front chamber 16.

To achieve this, the coming into contact and the loosening of the contact between plate 374 and pin 368 is sensed. This means that all following embodiments of the signal generation means can sense the coming into contact as well as the loosening of the contact and submit a corresponding signal to the electronic control device.

Fig. 2 and 3 show a first embodiment of the invention. Electromagnetic actuation of the control valve 20 is formed by a solenoid coil 361 and a plunger 363 and a signal generation means 365. The signal generation means 365 is disposed between a first and a second actuator 350, 360 which transmit an actuating movement P of a brake pedal to a (non-illustrated) master brake cylinder. A valve piston is formed by a sleeve member 362. The sleeve member 362 comprises a stepped bore 364 which receives a head portion 366 of a contact member forming the signal generation means 365. A pin 368 of said contact member 365 extends through the sleeve 362. The head portion 366 of the contact member 365 is resiliently biased by a coil spring against a step 372 of the stepped bore 364. The free end of the pin 368 faces plate 374. In an operative position of the brake booster, the free end has a predetermined distance T from the plate 374.

The sleeve 362 is positioned in a tube 376 so as to be axially slideable therein. The tube 376 and the sleeve 362 at its end facing the plate 374 are separated by a distance T1 from said plate 374 in the inoperative position of the brake booster.

Upon axial movement of the first actuator 350 by distance T1, the plate 374 contacts the end 373 of the pin 368. Consequently, the signal generation means 365 is triggered to provide a signal via an electrical wire 378 which is propagated to the (non-illustrated) electronical control device. A further axial movement of the actuator 350 by a distance T - T1 causes the sleeve 362 to contact the plate 374. Thereby, the plate 374 is urged against the second actuator 360 via a rubber element 380. In the fully actuated position, the pin 368 of the contact member 365 is completely situated in the sleeve 362 and moved against the coil spring 370 towards the first actuator 350.

As can also be seen in fig. 2, 3, the pin 368 of the contact member 365 is held within the stepped bore 364 by an electrically insulating ring 384 at the end of the sleeve 362 facing the plate 374. The head portion 366 of the contact member 365 is also made of an electrically insulating material. Thus the pin 368 can be held on a predefined electrical potential. Each time, when the free end of the pin 368 facing the plate 374 comes into electrical and/or mechanical contact with the plate 374 which is connected with the ground potential of the vehicle, this can be sensed. The signal SG generated thereby is used by the electronic control device (not shown).

Fig. 4 and 5 show a further embodiment of the invention. Identical reference numerals as in fig. 2, 3 are related to identical or similar parts. In this embodiment, the signal generation means 365 is received in a sleeve 362 in which a coil spring 370 urges the signal generation means against a ring 389 limiting the axial movement of the signal generation means 365 in a direction against the movement P of the actuator 350. In an inoperative position, the signal generation means 365 is held at a distance Y-X from an abutment 391 by a disc spring corresponding to disc spring arrangement 370. The abutment 391 is projected towards the disc spring 370 and is intregrally formed with trigger member 386. Upon an axial movement of the first actuator 350 in the direction P, the first actuator 350 must cover the distance X before it causes a triggering of a signal by a signal generation means 365. As soon as the first actuator 350 has pushed the trigger member 386 by a total distance Y (Y > X) the flange of the trigger member has compressed the spring arrangement 382 and trigger member 386 abuts the sleeve 393.

Fig. 6 shows a further embodiment of a control valve with a modified switch means. In this embodiment, the switch means is formed by the plate 374 which is mounted in a ring 389 which electrically insulates the plate 374 against the valve housing. The face 401 of the plate 374 oriented towards the free end 373 of the pin 368 can come into an electrical contact with the free end 373 of the pin 368 when the pin is moved in the direction of P by an axial movement of the first actuator 350. Since the plate 374 is held by the electrically insulating rubber plate 380, the contact of the pin 368 with the plate 374 can be sensed through a wire 403 soldered or welded to the plate 374. Consequently, the potential of the pin 368 (usually ground potential) can be sensed by the electronic control device when contact between the pin 368 and the plate 374 is made.

The various embodiments of the switching means can be combined to have a redundant and hence more reliable sensing of the movement.

All of the following have in common an ability to sense an interruption of supported braking by providing two independent signal generation means in case one of the two fails after the automatic (supported) braking sequence has been initiated. This "dual signal generation means concept" allows for a very flexible and efficient evaluation of the way a brake pedal is pressed down, is held in place, and is released by a driver. With this evaluation, the optimal operation of the automatic brake can be achieved.

The embodiment shown in fig. 7 differs from the embodiment shown in fig. 2 in so far, that a contact element 380 is provided on the head 366 of the contact member. This contact member is surrounded by two disc springs 382, 384 which, in the non-activated position keep trigger member 386 at a predetermined distance U from the contact member. This trigger member 386 is provided with a seat 388 for the distal end 387 of the actuating member 350. Upon axial movement of the first actuator 350 by the distance U, a signal SF is triggered by the contact element 380. Again, this contact element 380 is mounted between the head portion 366 and the trigger member 386 so as to be electrically insulated from the head portion 366.

In the embodiment of fig. 7, the distance U between the contact element 380 and the trigger member 386, as well as the spring force of the spring arrangement 382, 384 disposed between the trigger member 386 and the contact element 380, and the distance T between the pin 368 and the plate 374 as well as the spring arrangement 370 (in the embodiment of fig. 2) between the head portion 366 and the stepped bore 364 are dimensioned such that upon the actuator 350 returning from an operative position into an inoperative position, the contact element 380 and the trigger member 386 are released from each other before the end portion 373 of the pin 368 is released from plate 374. This also means, that the contact element 380 and the trigger member 386 come into contact before the free end 373 of the pin 368 comes into contact with the plate 374 when the actuator 350 is moved from an inoperative position to an operative position. Since the physical properties of the springs 382, 384 and 370, respectively, are known as well as the distances T, T1 and U, respectively, it is possible to determine the condition for release of the electronically controlled booster from the time delay between the two signals SF and SG.

The embodiment of fig. 7 is mounted in an electrically insulating housing 390.

The plate 374 can also be electrically insulated from the brake booster housing and be connected to a specific electric potential so that defined electrical signals can be provided to the electronic control device.

In the afore-mentioned embodiments of figs. 2-7, the signal generation means provided a ground signal to the electronic control device when the actuating member or the pin contacted the signal generation means. Due to the various electronic devices in a vehicle, noise and electromagnetic radiation interferences may be superimposed on the ground potential. This can result in problems when further processing the signals in a subsequent electronic control device. In order to overcome such problems the embodiment of figs. 8 to 10 may be used as an alternative.

The embodiment of fig. 8 corresponds to the embodiment of fig. 2 in as far as the valve means 20, the electromagnetic actuation 361, the first and second actuation means 250 and 360 etc. are concerned. The signal generation means 365 are altered in the following manner: instead of having a uniform metallic plate 374 (as in fig. 2), the plate 374' of fig. 8 is provided with at least two contact areas which are electrically isolated from each other. The plate and its contact areas are mounted in an electrically isolated manner in the metallic ring 410. When the free end 373 of the pin 368 which is electrically conducting, comes into contact with the (at least two) contact areas 411a and 411b of the plate 374' in the operative position of the actuation means 350, the contact areas are bridged by the pin. The pin 368 is electrically insulated from the sleeve 362. The two contact areas 411a, 411b are provided with wires 413a, 413b which lead to the (not shown) electronical control device.

It is certainly possible to provide more than two contact areas 411a, 411b in order to increase the security of the signal generation. This however, requires further wires 413a, 413b as well as signal input terminals at the electronical control device.

The pin 368 is supported by a spring arrangement 370 at the end of pin 368 opposite to the free end 373 in order to provide for a contact making and contact braking between the free end 373 and the contact areas 411a and 411b.

In the embodiment of fig. 9, the plate 374 is provided with one (or more) contact areas 411 that is electrically insulated against the contact plate 374. It is, however, also possible to have the entire contact plate 374 be insulated against the ground potential of the metallic parts surrounding the plate 374. The contact area 411 can be brought into electrical and mechanical contact with the free end 373 of the pin 368 which is biased by a spring arrangement 370 in the direction towards the plate 374 and electrically insulated against the sleeve 362. The contact area 411 and the free end 373 of the pin 368 are provided with wires 413a, 413b which lead to the (not shown) electronical control device.

Fig. 10 shows a modification of the switch means shown in fig. 7. The main difference lies in the fact that a common signal input wire 420 leads to the pin 368 and that the plate 374 is provided with a first signal output wire 422 connected to a contact area 411 mounted in the plate 374 and a second signal output wire 424 connected to the spring loaded contact member 380. Again, the pin 368 is resiliently biased by a spring arrangement 370 and electrically insulated against the sleeve 362.

With the signals provided by the afore-mentioned embodiments of fig. 2 to 10, it is possible to sense brake roll back. This is explained hereinafter with reference to fig. 10. Upon operation of the brake pedal by the driver, the actuating means 350 is moved in the direction of the arrow P. Due to the dimensioning of the spring arrangements 370, 382 and the distances T and U in the first and second signal generation means, a first signal is provided at the wire 422. Upon a further movement of the first actuation means 350 in the direction of the arrow P, the spring arrangement 382 is compressed so that the path U is overcome and a second signal is provided after a time period depending on the force and speed with which the driver is operating the brake pedal, at the other wire 424.

In case the time difference between the occurrence of the first signal and the second signal is shorter than a predetermined period of time, the electronic activation of the valve means by operating the solenoid can be triggered by the electronic control device.

From the order of occurrence of the first and second signals provided by the first and second signal generation means, the different operation modes of the braking system can be sensed and distinguished. Depending on the dimensioning of the spring arrangements and the free general path of the first actuation means 350 and the pin 368, the first and second signals are provided in a certain order when the brake pedal is pressed and these signals will also occur in a specific order when the brake pedal is released by the driver. During the period of time when the brake pedal is held down in a depressed position, both signal are present simultaneously. Thus, the dynamics of the pressing down and releasing of the brake pedal can be determined from the order in which the signals from the first and second signal generation means are generated.

This means that not only the aspect of redundancy can be successfully handled by providing two (or more) independent signal generation means, but is also possible to detect and/or to determine critical and characteristic points in the path of the brake pedal actuation by a driver. If for example, the brake pedal is activated with an actuating force exceeding a certain threshold value and/or exceeding a predetermined actuation speed, the signals from the first and from the second signal generation means will occur within a predetermined period of time. If thereafter, a driver will release a brake pedal just slightly, only one of the two signal generation means will be released again and one of the signals will disappear, while the other signal will still be remain present. Only when the driver fully releases the brake pedal, the other signal generation means will sense this and the signal resulting from that signal generation means will also disappear.

This fail-safe and very efficient way of sensing the brake pedal operation is very effective and can be achieved by very reliable and cost-effective means.

## Claims

1. A vehicle brake system including an electronically controlled brake booster (10), comprising
- a first actuator (350) and a second actuator (360) mounted coaxially along an axis (A),
- said first actuator (350) is connected to said second actuator (360) for transmitting to said second actuator (360) an actuating movement (P) of a brake pedal, wherein the second actuator (360) transmits the movement to a master brake cylinder,
- a signal generation means (365) disposed between said first and second actuators (350, 360) for generating a signal to be supplied to a control means of the brake booster (10), wherein the signal generation means (365) is triggered by a relative movement between the first actuator (350) and the second actuator (360),
**characterized** in that
- the signal generation means (365) is disposed between said first and second actuators (350, 360) and comprises a pin (368, 391) and a contact member (374; 365), which pin (368, 391) when it contacts said contact member (375, 365), supplies said signal to the control means,
- said pin (368, 391) and said contact member (374) are mounted in said axis (A).

2. The vehicle brake system as defined in claim 1,
**characterized** in that
- the pin (368) has a head portion (366) and is received in a sleeve 362, and
- the head portion (366) being resiliently biased by a spring arrangement (370).

3. The vehicle brake system as defined in claim 2,
**characterized** in that
a sleeve (362) is received in a tube (376) so as to be axially slideable therein, said tube (326) extending at its end facing the plate (374) beyond the sleeve (362) by a distance T1, and that the end of the pin (373) is even with the sleeve (362), in its inoperative position.

4. The vehicle brake system as defined in claim 1,
**characterized** in that
an end (373) of said pin (368) facing the plate (374) has a predetermined distance T from the plate (374), in an inoperative position, and
upon axial movement of the first actuator (350) by a distance T1 the plate (374) contacts the end of the pin (373) facing the plate (374), and a signal is triggered, and that a further axial movement of the actuator (350) by a distance T - T1 causes the sleeve (362) to contact the plate (374) and urge the plate (374) against the second actuator (360), wherein the contact member (365) in the sleeve (362) withdraws towards the first actuator (350).

5. The vehicle brake system as defined in claim 4,
**characterized** in that
the pin (368) of the contact member (365) is mounted in the sleeve (362) so as to be electrically insulated.

6. The vehicle brake system as defined in claim 5,
**characterized** in that
a contact element (380) is provided on the head of the contact member (365) which, upon an axial movement of the first actuator (350) by a distance U, triggers a signal.

7. The vehicle brake system as defined in claim 6,
**characterized** in that
a trigger member (386) is provided between the contact element (380) and the first actuator (350) which is resiliently biased by a spring arrangement (382, 384) against the first actuator (350) and is spaced from the contact element (380) by a distance U, in the inoperative position.

8. The vehicle brake system as defined in claim 7,
**characterized** in that
the contact element (380) is mounted so as to be electrically insulated from the head portion (366).

9. The vehicle brake system as defined in claim 7,
**characterized** in that
the distance U between the contact element (380) and the trigger member (386), as well as the spring arrangement (382, 384) disposed between the trigger member (386) and the contact element (380), and the distance T between the pin (386) and the plate (374), as well as the spring arrangement (370) between the head portion (366) and the stepped bore (364) are dimensioned such that, upon actuator (350) returning from an operatlve position to an inoperative position, the contact element (380) and the trigger member (386) are released before the pin (368) is released from the plate (374).

10. The vehicle brake system as defined in claim 1,
**characterized** in that
the plate (374) is electrically insulated from the brake booster housing.

11. The vehicle brake system as defined in claim 1,
**characterized** in that
the signal generation means (365) is received in the sleeve (362) and is in its direction of movement resiliently biased by a spring arrangement (370) towards the first actuator (350), said first actuator (350) covering a first distance X before it causes a triggering of a signal by the signal generation means (365), and may cover a total distance Y (Y > X) before it abuts an abutment (382) on the sleeve (362).

12. The vehicle brake system as defined in claim 11,
**characterized** in that
the signal generation means (365) is received in a bore (364) of the sleeve (362) as to be electrically insulated, and is biased by the spring arrrangement (370) against a projection.

13. The vehicle brake system as defined in claim 11,
**characterized** in that
the first actuator (350) is resiliently supported by a spring arrangement (370) against the sleeve (362).

14. The vehicle brake system as defined in claim 1,
**characterized** in that
the plate (374) is provided with at least two contact areas (411a, 411b) which are electrically isolated from each other and are mounted such that the electrically conducting pin (368), coming into contact with the plate (374) in its operative position, bridges the at least two contact areas (411a, 411b), which are operatively connected to the electronic control device to provide a signal to the electronic control device.

15. The vehicle brake system as defined in the preceeding claims,
**characterized** in that
the signals of at least two different signal generation means (380, 368) are used for the signal generation in the electronic control device.

16. The vehicle brake system as defined in claim 15,
**characterized** in that
a first signal from a first signal generation means (380) and a second signal from a second signal generation means (368) are used to sense and to distinguish the operational modes of the braking system.

17. The vehicle brake system as defined in claim 16,
**characterized** in that
the dynamics of the pressing down and releasing of the brake pedal is determined from the successive order in which the signals from the first and the second signal generation means (380, 368) occur, depending on the characteristics of the spring arrangement (370), the distances between the sensing means and the actuating means, and the force and/or the speed with which the brake pedal is pressed down and/or released.

18. The vehicle brake system as defined in claim 15,
**characterized** in that
a time delay of a predetermined duration between a first signal from the first signal generation means (380) and the second signal generation means (368) is used to have the electronic control device initiate an automatic braking sequence.

19. The vehicle brake system as defined in claim 15,
**characterized** in that
the properties of the spring arrangements (370, 382) are dimensioned such that a compression of at least one of said spring arrangements (370, 382) results in the generation of a signal by a first or a second signal generation means (380, 368) which is used as a threshold value to actuate the electronic control device to initiate an automatic braking sequence.

20. The vehicle brake system as defined in claim 2,
**characterized** in that
- said sleeve (362) has a stepped bore (364) and,
- said head portion (366) is resiliently biased by the spring arrangement (370) against a step of the stepped bore (364).

## Patentansprüche

1. Fahrzeugbremsanlage mit einem elektronisch gesteuerten Bremskraftverstärker (10), mit
- einem ersten Betätigungsglied (350) und einem zweiten Betätigungsglied (360), die koaxial entlang einer Achse (A) befestigt sind, wobei das erste Betätigungsglied (350) mit dem zweiten Betätigungsglied (360) verbunden ist, um auf dieses eine Betätigungsbewegung (P) eines Bremspedals zu übertragen, wobei das zweite Betätigungsglied (360) die Bewegung zu einem Hauptbremszylinder weiterleitet,
- einer zwischen dem ersten und dem zweiten Betätigungsglied (350, 360) angeordneten Signalgebereinrichtung (365) zum Erzeugen eines einer Steuereinrichtung des Bremskraftverstärkers (10) zuzuführenden Signals, wobei die Signalgebereinrichtung (365) durch eine Relativbewegung zwischen dem ersten Betätigungsglied (350) und dem zweiten Betätigungsglied (360) ausgelöst wird,
dadurch **gekennzeichnet,** daß
- die Signalgebereinrichtung (365) zwischen dem ersten und dem zweiten Betätigungsglied (350, 360) angeordnet ist und einen Stift (368, 391) sowie ein Kontaktglied (374; 365) umfaßt, wobei der Stift (368, 391) das Signal an die Steuereinrichtung liefert, wenn er mit dem Kontaktglied (375, 365) in Kontakt kommt,
- der Stift (368, 391) und das Kontaktglied (374) in der Achse (A) angebracht sind.

2. Fahrzeugbremsanlage nach Anspruch 1,
dadurch **gekennzeichnet,** daß
- der Stift (368) ein Kopfteil (366) umfaßt und in einer Hülse (362) untergebracht ist, und
- das Kopfteil (366) durch eine Federanordnung (370) elastisch vorgespannt ist.

3. Fahrzeugbremsanlage nach Anspruch 2,
dadurch **gekennzeichnet,** daß
eine Hülse (362) axial beweglich in einem Rohr (376) angeordnet ist, wobei das Rohr (326) an seinem der Platte (374) zugewandten Ende um die Distanz T1 über die Hülse (362) hinausragt, und daß das Ende des Stifts (373) plan mit der Hülse (362) ist, wenn sich diese in ihrer Ruhestellung befindet.

4. Fahrzeugbremsanlage nach Anspruch 1,
dadurch **gekennzeichnet,** daß
in einer Ruhestellung ein der Platte (374) zugewandtes Ende (373) des Stifts (368) einen vorbestimmten Abstand T von der Platte (374) hat, und bei einer Axialbewegung des ersten Betätungsglieds (350) um eine Distanz T1 die Platte (374) mit dem der Platte (374) zugewandten Ende des Stifts (373) in Kontakt kommt und ein Signal ausgelöst wird, und daß eine weitere Axialbewegung des Betätigungsglieds (350) um eine Distanz T - T1 die Hülse (362) veranlaßt, mit der Platte (374) in Kontakt zu kommen und diese gegen das zweite Betätigungsglied (360) zu drängen, wobei sich das Kontaktglied (365) in der Hülse (362) in Richtung auf das erste Betätigungsglied (350) zurückzieht.

5. Fahrzeugbremsanlage nach Anspruch 4,
dadurch **gekennzeichnet,** daß
der Stift (368) des Kontaktglieds (365) derart in der Hülse (362) befestigt ist, daß er elektrisch isoliert ist.

6. Fahrzeugbremsanlage nach Anspruch 5,
dadurch **gekennzeichnet,** daß
am Kopf des Kontaktglieds (365) ein Kontaktelement (380) angebracht ist, das bei einer Axialbewegung des ersten Betätigungsglieds (350) um eine Distanz U ein Signal auslöst.

7. Fahrzeugbremsanlage nach Anspruch 6
dadurch **gekennzeichnet,** daß
zwischen dem Kontaktelement (380) und dem ersten Betätigungsglied (350) ein Auslöseglied (386) vorgesehen ist, das mittels einer Federanordnung (382, 384) elastisch gegen das erste Betätigungsglied (350) vorgespannt und in Ruhestellung vom Kontaktelement (380) einen Abstand U hat.

8. Fahrzeugbremsanlage nach Anspruch 7,
dadurch **gekennzeichnet,** daß
das Kontaktelement (380) derart befestigt ist, daß es vom Kopfteil (366) elektrisch isoliert ist.

9. Fahrzeugbremsanlage nach Anspruch 7,
dadurch **gekennzeichnet,** daß
der Abstand U zwischen dem Kontaktelement (380) und dem Auslöseglied (386), sowie die Federanordnung (382, 384) zwischen dem Auslöseglied (386) und dem Kontaktelement (380) und der Abstand T zwischen dem Stift (386) und der Platte (374), sowie die Federanordnung (370) zwischen dem Kopfteil (366) und der gestuften Bohrung (364) derart bemessen sind, daß nach Rückkehr des Betätigungsglieds (350) aus einer Betriebsstellung in eine Ruhestellung das Kontaktelement (380) und das Auslöseglied (386) freigegeben werden, bevor der Stift (368) sich von der Platte (374) löst.

10. Fahrzeugbremsanlage nach Anspruch 1,
dadurch **gekennzeichnet,** daß
die Platte (374) vom Bremskraftverstärkergehäuse elektrisch isoliert ist.

11. Fahrzeugbremsanlage nach Anspruch 1,
dadurch **gekennzeichnet,** daß
die Signalgebereinrichtung (365) in der Hülse (362) angeordnet und in seiner Bewegungsrichtung durch eine Federanordnung (370) elastisch gegen das erste Betätigungsglied (350) vorgespannt ist, wobei dieses eine erste Strecke X zurücklegt, bevor es eine Signalauslösung durch die Signalgebereinrichtung (365) veranlaßt, und eine Gesamtstrecke Y (Y > X) zurücklegen kann, bevor es gegen einen Anschlag (382) an der Hülse (362) schlägt.

12. Fahrzeugbremsanlage nach Anspruch 11,
dadurch **gekennzeichnet,** daß
die Signalgebereinrichtung (365) derart in einer Bohrung (364) der Hülse (362) angeordnet ist, daS sie elektrisch isoliert und von der Federanordnung (370) gegen einen Vorsprung vorgespannt ist.

13. Fahrzeugbremsanlage nach Anspruch 11,
dadurch **gekennzeichnet,** daß
das erste Betätigungsglied (350) von einer Federanordnung (370) elastisch gegen die Hülse (362) abgestützt wird.

14. Fahrzeugbremsanlage nach Anspruch 1,
dadurch **gekennzeichnet,** daß
die Platte (374) mindestens zwei elektrisch voneinander isolierte Kontaktbereiche (411a, 411b) besitzt, die derart befestigt sind, daS der elektrisch leitende, mit der Platte (374) in ihrer Arbeitsstellung in Kontakt kommende Stift (368), die mindestens zwei Kontaktbereiche (411a, 411b) übergreift, die mit der elektrischen Steuereinrichtung wirksam verbunden sind, um ein Signal an die elektronische Steuereinrichtung zu liefern.

15. Fahrzeugbremsanlage nach den vorhergehenden Ansprüchen, dadurch **gekennzeichnet,** daß
die Signale von mindestens zwei verschiedenen Signalgebereinrichtungen (380, 368) zur Signalerzeugung in der elektronischen Steuereinrichtung verwendet werden.

16. Fahrzeugbremsanlage nach Anspruch 15,
dadurch **gekennzeichnet,** daß
ein erstes Signal von einer ersten Signalgebereinrichtung (380)und ein zweites Signal von einer zweiten Signalgebereinrichtung (368) zum Erfassen und Unterscheiden der Betriebsarten des Bremssystems verwendet werden.

17. Fahrzeugbremsanlage nach Anspruch 16,
dadurch **gekennzeichnet,** daß
die Dynamik des Niederdrückens und Loslassens des Bremspedals von der Aufeinanderfolge der von der ersten und der zweiten Signalgebereinrichtung (380, 368) kommenden Signale bestimmt wird, und zwar abhängig von der Beschaffenheit der Federanordnung (370), den Abständen zwischen den Erfassungs- und Betätigungseinrichtungen, und der Kraft und/oder Geschwindigkeit mit der das Bremspedal niedergedrückt und/oder losgelassen wird.

18. Fahrzeugbremsanlage nach Anspruch 15,
dadurch **gekennzeichnet,** daß
eine Totzeit vorbestimmer Dauer zwischen einem ersten Signal von der ersten Signalgebereinrichtung (380) und der zweiten Signalgebereinrichtung (368) dazu verwendet wird, die elektronische Steuereinrichtung zu veranlassen, eine automatische Bremssequenz einzuleiten.

19. Fahrzeugbremsanlage nach Anspruch 15,
dadurch **gekennzeichnet,** daß
die Wirksamkeit der Federanordnung (370, 382) derart ausgelegt ist, daß durch ein Zusammendrücken mindestens einer der Federanordungen (370, 382) eine erste oder zweite Signalgebereinrichtung (380, 368) veranlaßt wird, ein Signal auszulösen, das als Schwellenwert zum Betätigen der elektronischen Steuereinrichtung zum Auslösen einer automatischen Bremsfolge verwendet wird.

20. Fahrzeugbremsanlage nach Anspruch 2,
dadurch **gekennzeichnet,** daß
- die Hülse (362) eine gestufte Bohrung (364) umfaßt und
- der Kopfteil (366) durch die Federanordnung (370) elastisch gegen eine Stufe der gestuften Bohrung (364) vorgespannt ist.

## Revendications

1. Système de freinage de véhicule comprenant un amplificateur de freinage commandé électroniquement (10), comprenant
- un premier actionneur (350) et un second actionneur (360) montés coaxiaux suivant un axe (A), ledit premier actionneur (350) étant relié audit second actionneur (360) pour transmettre audit second actionneur (360) un mouvement d'actionnement (P) d'une pédale de frein, le second actionneur (360) transmettant le mouvement à un maître-cylindre de frein,
- des moyens de génération de signal (365) disposés entre lesdits premier et second actionneurs (350, 360) pour générer un signal destiné à être transmis à un moyen de commande de l'amplificateur de freinage (10), dans lequel les moyens de génération de signal (365) sont déclenchés par un mouvement relatif entre le premier actionneur (350) et le second actionneur (360),
caractérisé en ce que
- les moyens de génération de signal (365) sont disposés entre lesdits premier et second actionneurs (350, 360) et comprennent une broche (368, 391) et un organe de contact (374; 365), laquelle broche (368, 391), lorsqu'elle touche ledit organe de contact (375, 365), transmet ledit signal au moyen de commande,
- ladite broche (368, 391) et ledit organe de contact (374) sont montés suivant ledit axe (A).

2. Système de freinage de véhicule selon la revendication 1,
caractérisé en ce que
- la broche (368) a une portion de tête (366) et est reçue dans un manchon (362), et
- la portion de tête (366) est poussée élastiquement par un système à ressort (370).

3. Système de freinage de véhicule selon la revendication 2,
caractérisé en ce que
le manchon (362) est reçu dans un tube (376) de façon à pouvoir coulisser axialement dans celui-ci, ledit tube (326) s'étendant à son extrémité faisant face à la plaque (374) au-delà du manchon (362) d'une distance T1, et en ce que l'extrémité de la broche (373) est au même niveau que le manchon (362), dans sa position inactive.

4. Système de freinage de véhicule selon la revendication 1,
caractérisé en ce que
une extrémité (373) de ladite broche (368) faisant face à la plaque (374) est à une distance prédéterminée T de la plaque (374), dans une position inactive, et lors d'un mouvement axial du premier actionneur (350) d'une distance T1 la plaque (374) vient en contact avec l'extrémité de la broche (373) faisant face à la plaque (374), et un signal est déclenché, et en ce qu'un mouvement axial supplémentaire de l'actionneur (350) d'une distance T - T1 fait entrer le manchon (362) en contact avec la plaque (374) et lui fait pousser la plaque (374) contre le second actionneur (360), l'organe de contact (365) dans le manchon (362) se retirant en direction du premier actionneur (350).

5. Système de freinage de véhicule selon la revendication 4,
caractérisé en ce que
la broche (368) de l'organe de contact (365) est montée dans le manchon (362) de façon à être isolée électriquement.

6. Système de freinage de véhicule selon la revendication 5,
caractérisé en ce que
il y a sur la tête de l'organe de contact (365) un élément de contact (380) qui, lors d'un mouvement axial du premier actionneur (350) d'une distance U, déclenche un signal.

7. Système de freinage de véhicule selon la revendication 6,
caractérisé en ce que
il y a entre l'élément de contact (380) et le premier actionneur (350) un organe de déclenchement (386) qui est poussé élastiquement par un système à ressort (382, 384) contre le premier actionneur (350) et est espacé de l'élément de contact (380) d'une distance U, dans la position inactive.

8. Système de freinage de véhicule selon la revendication 7,
caractérisé en ce que
l'élément de contact (380) est monté de façon à être isolé électriquement de la portion de tête (366).

9. Système de freinage de véhicule selon la revendication 7,
caractérisé en ce que
la distance U entre l'élément de contact (380) et l'organe de déclenchement (386), ainsi que le système à ressort (382, 384) disposé entre l'organe de déclenchement (386) et l'élément de contact (380), et la distance T entre la broche (386) et la plaque (374), ainsi que le système à ressort (370) entre la portion de tête (366) et l'alésage à gradins (364) sont dimensionnés de telle sorte que, lorsque l'actionneur (350) revient d'une position active à une position inactive, l'élément de contact (380) et l'organe de déclenchement (386) soient séparés avant que la broche (368) ne soit séparée de la plaque (374).

10. Système de freinage de véhicule selon la revendication 1,
caractérisé en ce que
la plaque (374) est isolée électriquement du boîtier de l'amplificateur de freinage.

11. Système de freinage de véhicule selon la revendication 1,
caractérisé en ce que
les moyens de génération de signal (365) sont reçus dans le manchon (362) et sont poussés élastiquement dans leur direction de mouvement par un système à ressort (370) vers le premier actionneur (350), ledit premier actionneur (350) couvrant une première distance X avant de provoquer un déclenchement d'un signal par les moyens de génération de signal (365), et peut couvrir une distance totale Y (Y > X) avant de buter sur une butée (382) du manchon (362).

12. Système de freinage de véhicule selon la revendication 11,
caractérisé en ce que
les moyens de génération de signal (365) sont reçus dans un alésage (364) du manchon (362) de façon à être isolés électriquement, et sont poussés par le système à ressort (370) contre une saillie.

13. Système de freinage de véhicule selon la revendication 11,
caractérisé en ce que
le premier actionneur (350) est appuyé élastiquement par un système à ressort (370) contre le manchon (362).

14. Système de freinage de véhicule selon la revendication 1,
caractérisé en ce que
la plaque (374) comprend au moins deux zones de contact (411a, 411b) qui sont isolées électriquement l'une de l'autre et sont montées de façon que la broche électriquement conductrice (368), entrant en contact avec la plaque (374) dans sa position active, relie lesdites au moins deux zones de contact (411a, 411b), qui sont reliées fonctionnellement au dispositif de commande électronique pour fournir un signal au dispositif de commande électronique.

15. Système de freinage de véhicule selon les revendications précédentes,
caractérisé en ce que
les signaux d'au moins deux moyens de génération de signal différents (380, 368) sont utilisés pour la génération de signal dans le dispositif de commande électronique.

16. Système de freinage de véhicule selon la revendication 15,
caractérisé en ce que
un premier signal d'un premier moyen de génération de signal (380) et un second signal d'un second moyen de génération de signal (368) sont utilisés pour détecter et distinguer les modes opératoires du système de freinage.

17. Système de freinage de véhicule selon la revendication 16,
caractérisé en ce que
la dynamique de la pression et de la libération de la pédale de frein est déterminée à partir de l'ordre successif dans lequel les signaux du premier et du second moyen de génération de signal (380, 368) apparaissent, en fonction des caractéristiques du système à ressort (370), des distances entre les moyens de détection et les moyens d'actionnement, et de la force et/ou de la vitesse avec laquelle la pédale de frein est pressée et/ou libérée.

18. Système de freinage de véhicule selon la revendication 15,
caractérisé en ce que
un retard d'une durée prédéterminée entre un premier signal du premier moyen de génération de signal (380) et du second moyen de génération de signal (368) est utilisé pour faire déclencher au dispositif de commande électronique une séquence de freinage automatique.

19. Système de freinage de véhicule selon la revendication 15,
caractérisé en ce que
les propriétés des systèmes à ressort (370, 382) sont choisies de telle façon qu'une compression d'au moins un desdits systèmes à ressort (370, 382) provoque la génération d'un signal par un premier ou un second moyen de génération de signal (380, 368) qui est utilisé comme valeur de seuil pour actionner le dispositif de commande électronique pour déclencher une séquence de freinage automatique.

20. Système de freinage de véhicule selon la revendication 2,
caractérisé en ce que
- ledit manchon (362) présente un alésage à gradins (364) et,
- ladite portion de tête (366) est poussée élastiquement par le système à ressort (370) contre un épaulement de l'alésage à gradins (364).
